# EUROPEAN PATENT APPLICATION

(11) **EP 2 926 886 A1**
(43) Date of publication of application: **07.10.2015**
(21) Application number: 14163102.8
(22) Date of filing: 01.04.2014
(51) Int. Cl.: B01D 53/94, F01N 3/20

(54) **System comprising a decomposition unit for use on board of a vehicle**

(71) Applicant: Inergy Automotive Systems Research (Société Anonyme), 1120 Bruxelles (BE)
(72) Inventor: Monge-Bonini, Batriz, 1040 Brussels (BE); Dougnier, François, 3190 Boortmeerbeek (BE); Van Schaftingen, Jules-Joseph, 1300 Wavre (BE)
(74) Representative: Remy, Vincent Noel Paul

(57) **Abstract**

The system for use on board of a vehicle comprises a decomposition unit (2) for decomposing a compound under catalysis of a biological catalyst (3). The compound is for instance an ammonia precursor, and the biological catalyst is in solid form. At least one transfer means is present for transferring one of said compound and biological catalyst towards and/or away from the other one. The transfer means are for instance a moving device (15), for instance in the form of a float.

## Description

### FIELD OF THE INVENTION

The invention relates to a system for use on board of a vehicle comprising a decomposition unit for decomposition of a compound, for instance an ammonia precursor.

The invention also relates to a method of operating such a system on board of a vehicle.

The invention further relates to a vehicle comprising such a system.

### BACKGROUND OF THE INVENTION

A decomposition unit for ammonia precursor under the catalysis of a biological catalyst, more particularly a urease enzyme, has been proposed in several non-prepublished applications (patent application EP 13182919.4 and patent application EP 12199278.8) of the Applicant that are herein included by reference. In further investigations into such a system, the present inventors have come up with further improvements that enable that the system with the biological catalyst may be used over a longer period.

### SUMMARY OF THE INVENTION

Accordingly, it is an object of the invention to provide an improved method for preserving and protecting of the enzyme, so as to increase its lifetime.

According to a first aspect, the invention relates to a system for use on board of a vehicle, comprising (1) a decomposition unit for decomposing a compound under catalysis of a biological catalyst, and (2) at least one transfer means for transferring one of said compound and biological catalyst towards and/or away from the other one to contact and/or separate between the compound and the biological catalyst.

According to a second aspect, the invention relates to a vehicle comprising the system of the invention.

According to a third aspect, the invention relates to a method of operating a method of decomposition of a compound on board of a vehicle comprising a decomposition unit provided with a first of a compound and a biological catalyst, comprising the steps of: (1) transferring the second of said compound and said biological catalyst to establish contact between of both, so as to decompose the compound under catalysis of the biological catalyst, and (2) transferring the second away from the first of said compound and biological catalyst, when decomposition is to be terminated or interrupted.

According to a further aspect, the invention relates to the use of biological catalyst immobilized on a carrier for catalysis of decomposition of a compound in a decomposition unit on board of a vehicle, subsequent to transferring the biological catalyst and/or the compound for contact between the compound and the biological catalyst.

The invention is based on the insight that the lifetime of the biological catalyst may be increased by separation of the catalyst from the compound or a composition thereof, when the decomposition of the compound is not desired. The environment of said composition may not be optimal for the biological catalyst. For instance, the ammonia precursor urea has a pH of around 9.5, which is an aggressive environment for a biological catalyst and may reduce lifetime. Moreover, it is very difficult to control the temperature around the enzymes as they are surrounded by large volumes of liquid. Even worse, a vehicle may be used in both very hot and very cold environments, i.e. from below 0 °C up to above 40°C, which can denature biological catalyst. By separation of the biological catalyst, thermal conditioning means may be provided, for thermal conditioning the biological catalyst when it is not actively catalysing decomposition of the compound.

Functionally speaking, the biological catalyst is transferred from a chemical conversion mode (CCM) into an enzyme protection mode (EPM). Practically speaking, either the biological catalyst or the compound or both of them may be transferred towards and/or away from each other. The location of contact is not essential and may be defined by the form in which the biological catalyst and/or the compound are available. Thereto, the invention provides at least one transfer means, which is understood to cover a single transfer means to transfer the biological catalyst, suitably in a solid form, a plurality of tansfer means to transfer biological catalyst, a single or a plurality of transfer means for transfer of the compound, and at least one transfer means for transfer of biological catalyst and at least one transfer means for transfer of the compound.

According to the invention, it is preferred that the biological catalyst is immobilized into or onto a support, more preferably a solid support. The immobilized biological catalyst is in one embodiment embodied as a capsule with a dimension that is easily held and/or separated from the compound, more particularly a liquid composition thereof. The biological catalyst is in another embodiment immobilized onto a holding device, such as a net, membrane, fibre, plate. The immobilized catalyst is in a further embodiment distributed through the compound, particularly a fluid composition thereof, when in the chemical conversion mode, and may be separated from the fluid composition.

In a first embodiment of the invention, a moving device is present for moving the biological catalyst towards and/or away from the compound. This allows to bring the biological catalyst to a predefined location in which it is not in contact with the compound, for instance above a filling level of the liquid composition of the compound, and/or into a specific protection chamber. Suitably, thermal conditioning means are provided at this predefined location, so as to protect the biological catalyst. More particularly, the moving device is used in combination with a holding device for the biological catalyst. This holding device may be a fibre, a membrane, a cage, a basket, a sieve or the like.

The thermal conditioning means may be embodied as any heating or cooling elements known by the state-of-art; for instance, Peltier effect cells allowing cooling down, or heating up can be used. The thermal conditioning elements may also contain insulating elements so as to limit the energy consumption; the thermal conditioning elements may further comprise a phase change material so as to keep more easily and for longer period of time the temperature range corresponding to the optimal conservation of the enzymes.

In one embodiment, the moving device is an actuator. The actuator may be any type of actuator, such as a solenoid, magnetic actuator such as stepper motor, hydraulic or pneumatic piston. The actuator may be combined with a spring device for the purpose of pulling the biological catalyst out of the liquid composition when a power supply is disconnected. This embodiment is deemed particularly beneficial for the moving of the biological catalyst in the form of one or more capsules. In one implementation the capsules are held on a holding device in the form of a basket. In this embodiment, the contact region is limited to a portion of the decomposition unit, i.e. where the basket is located in the chemical conversion mode. Distibution means such as a stirrer and/or a pump are suitably present to arrange flow of the chemical compound towards the biological catalyst. In another implementation, the holding device is a sieve that is moved, and the holding device (or a plurality thereof) has dimensions corresponding to the decomposition unit or a chamber therein for the biological catalyst. When moving the sieve upwards, the capsules will be carried upwards, whereas the liquid composition flows downwards through the sieve openings.

In an alternative embodiment, the moving device is a floating device. The design of the floating device is suitably such that the floating device is overflowed by the compound (i.e. a liquid composition thereof) in the chemical conversion mode and that the floating device arrives at a liquid surface of the said liquid in a transfer to the enzyme protection mode. The overflowing of the floating device with liquid will occur upon movement of the vehicle, which results in waves of the liquid.

Suitably, guides are provided in the decomposition unit. The holding device of the capsules is suitably present in a sub-area defined by said one or more guides. These guides allow sliding of the floating device while keeping the holding device of the capsule in constant orientation relative to the decomposition unit. In a further implementation, a level sensor is combined with the floating device or with the guides.

In one embodiment, the system is furthermore provided with a loading device for capsules. Suitably, the loading device is configured for loading capsules into a storage location within the decomposition unit, and preferably above a predefined filling level of the liquid in the decomposition unit. This allows storage in an efficient location. Moreover transfer from the storage location to a holding device can be arranged in a practical manner.

Suitably, the loading device makes use of the fluid pressure so as to arrange the capsules into a storage location inside the decomposition unit above a filling level of the decomposition unit with liquid. Thereto, in one suitable implementation, the loading device is provided with an orifice in a capsule pipe for entry of vapour, located at a desired filling level, and a degassing means within said capsule pipe and extending to outside the composition unit. When the liquid arrives at the orifice, the degassing of vapour from the decomposition unit is terminated, as the degassing means, such as a degassing line, is no longer accessible. A pressure wave may then move capsules in the capsule pipe into a storage location. The capsule may be disposed to the holding device from said storage location.

According to a second embodiment of the invention, the transfer means are embodied as at least one fluid transfer device for transfer of the compound towards and away from the biological catalyst. Generally, this may be a transfer of compound in or out of the decomposition unit, or alternatively transfer of compound inside the decomposition unit, particularly when comprising several chambers. The fluid transfer device is for instance a pump, and may also be embodied as a valve and downward flowing pipe. It is not deemed necessary that the decomposition unit is emptied. Rather, it may be sufficient to remove the compound (i.e. a composition thereof in fluid form) to such extent, that no longer contact occurs between the compound and the biological catalyst. Contact may herein be provided in a suitable location or zone or (surface) site within the decomposition unit, for instance a zone just below an upper filling level of the decomposition unit, or alternatively a separate chamber in the decomposition unit, suitably provided with a valve at its entry. Combinations are also feasible, for instance a chamber in the decomposition unit through which the liquid is pumped, with a valve at its entry for closure and the biological catalyst provided in the upper region of said chamber.

In one further implementation hereof, the system further comprises a buffer tank into which the compound or a composition thereof can be transferred so as to get the compound out of the contact region. In again a further implementation hereof, the system further comprises a heater for activating the biological catalyst.

According to a third embodiment of the invention, both the biological catalyst and the compound are transferred. This third embodiment most suitably uses biological catalyst immersed on a support carrier and spread through the composition of the compound. One example hereof is that the compound or the fluid composition hereof is removed via a membrane and that the biological catalyst remains behind. The biological catalyst may thereafter be relocated, for instance to a location where it can be thermally conditioned.

In one preferred implementation of this third embodiment, the biological catalyst is immobilized on a magnetic support. The immobilized biological catalyst is then attracted by means of a magnet to a predefined location in the decomposition unit. The compound is then transferred in as far as needed to separate the biological catalyst from the compound. The magnetic attraction of immobilized catalyst is known, for instance from S. Akgöl, Food Chemistry 74 (2001), 281-288, wherein invertase is immobilized onto magnetic polyvinylalcohol microspheres for the conversion of sucrose. Furthermore, the technology is known for the transport of enzymes to specific locations with a human body, said transport being driven by application of a magnetic field. Alternative implementations of magnetic microspheres will be known to the skilled person and are not excluded.

The decomposition unit may be operated batchwise or in a continuous manner. Suitably, use is made of batch-wise operation. Preferably, the control occurs by means of a time-control device or a chemical sensor for control of the conversion. A time-control device can be a clock or any timing mechanism driven by a motor, by the vehicle electronic system or by another mean known by the status of the art. A chemical sensor device can be for example a pH sensor. When the conversion is complete, for instance, when 50% or ideally 80% of the first composition is converted into product, the resulting effluents may be transferred out of the converter.

Furthermore, a buffer tank may be present for containing reaction product of the biochemical conversion by means of the biological catalysts. The size of the buffer tank may be chosen in dependence on the specific application and the flow rate of reaction product.

The system of the invention is suitably provided with a tank for storing the compound (or a composition thereof) prior to entry into the decomposition unit. A fluid transfer device may be present for transferring the compound from the tank to the decomposition unit. A fluid transfer device can be for example a pump, valve, combination of both, gravity, gravity in combination with a valve or a valve in combination with whatever system known by the state of the art to transfer liquid.

The compound is suitably an ammonia precursor, such as for instance urea or a concentrated urea solution of at least 10% urea, or a mixture known as aqua ammonia, which typically comprises ammonium hydroxide, residue of ammonia precursor and eventually other ammonium salts, such as ammonium bicarbonate (NH₄HCO₃). In this embodiment, the reaction products may be for instance ammonia or hydrogen suitable for use in either selective catalytic reduction (SCR) methods for purifying exhaust gases or for fuelling fuel cells operating on the basis of hydrogen. Suitable biological catalysts are herein urease.

In an alternative embodiment, the compound is a hydrogen precursor, such as ammonia or polysaccharide. Good results are known for the enzymatic conversion of a polysaccharide such as sucrose into hydrogen, for instance with enzymes such as invertase, glucose dehydrogenase (GDH), hydrogenase, and glucose isomerase (GI). This may be highly useful to provide hydrogen for use in fuel cells.

The biological catalysts are suitable enzymes, that may be isolated or be present as part of living microorganisms that are feasible of producing enzymes for the biochemical conversion.

More particularly, the system of the invention is designed for and use on board of a vehicle, including cars, trucks and motors, using ether gasoline, diesel and optionally being a hybrid type that can also be driven on fuel cells. The system of the invention is thereto suitably coupled to an engine or to an SCR, and is operative during use of the vehicle.

The features set out above for the first aspect of the invention may also be applied to the other aspects.

### BRIEF INTRODUCTION OF THE FIGURES

These and other aspects of the invention will be further elucidated with references to the Figures, which are not drawn to scale and are purely diagrammatical, wherein:
Fig. 1 shows a cross-sectional schematic view of the system of the invention according to a first embodiment;
Fig. 2a and 2b show a schematic cross-sectional view of a first embodiment of the decomposition unit of the invention, wherein Fig. 2a shows the converter with the enzyme in the enzyme protection mode and Fig. 2b shows the converter with the enzyme in the chemical converter mode;
Fig. 3a and 3b show in a schematic cross-sectional view a second embodiment of the decomposition unit of the invention, again both in enzyme protection mode and in chemical converter mode;
Fig. 4a and 4b show in a schematic cross-sectional view a third embodiment of the decomposition unit of the invention;
Fig. 5a and 5b show in a schematic cross-sectional view a fourth embodiment of the decomposition unit of the invention.

### DETAILED DISCUSSION OF ILLUSTRATED EMBODIMENTS

The figures are not drawn to scale. Equal reference numerals in different figures refer to identical or corresponding elements.

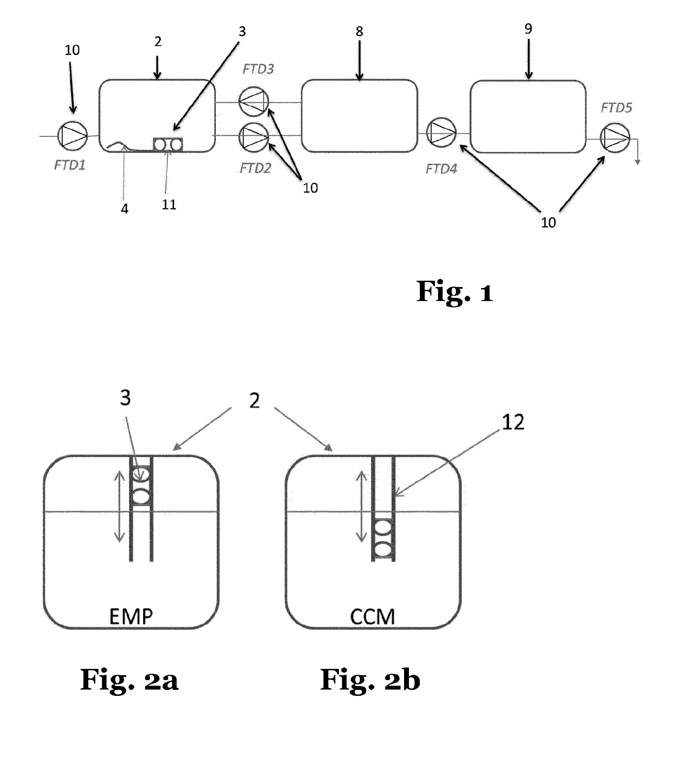

Fig. 1 shows a cross-sectional schematic view of the storage and conversion system of the invention according to a first embodiment. According to this embodiment, the system is a Selective Catalytic Reduction (SCR) system, for conversion of an ammonia precursor into ammonia and use thereof. Such SCR system is typically present in vehicles for reduction of NOₓ pollution. The SCR system comprises a tank (not drawn), that is in use filled with a commercially available liquid reductant, such as Adblue^{®} available from Total and matching the ISO 22241 standard specifications. The Adblue^{®} liquid reductant contains 32.5 ± 0.7 wt% urea. However, alternatively densities are by no means excluded. The liquid reductant will hereinafter also be referred to as an urea solution. It is transferred to a decomposition unit 2 by a fluid transfer device (FTD) 10. A fluid transfer device can be for example a pump, valve, but alternatively gravity is exploited, in the sense that the tank and the converter 2 are connected by means of a tank with a suitable orientation. A combination of both, gravity, gravity in combination with a valve or the like is also feasible. The FTD 1 ensures the filling of ammonia precursor in the decomposition unit up to a certain level. It suitably operates under control of a level sensor (not shown).

The decomposition unit 2 contains a catalyst composition in solid form. The catalyst is more precisely a biocatalyst such as an enzyme. Preferably, use is made of urease enzyme (EC 3.5.1.5) for the conversion of urea into ammonia. Use can be made of urease of any origin, such as Jack bean, *C. Vulgaris,* Pigeonpea colosynth. The catalyst composition in solid form is more preferably embodied as a capsule 3. Hereinafter, the invention will be further explained with reference to a biological catalyst embodied as a capsule. However, as discussed before, the invention may also be used in other forms, for instance the immobilization of the biological catalyst to a mesh or membrane, or the immobilization of the biological catalyst onto magnetic microspheres that may be attracted to and therewith collected by magnetic attraction means.

The capsule 3 suitably comprises the biological catalyst immobilized on a carrier. A variety of carriers may be used include synthetic polymers, biopolymers, hydrogels and inorganic supports. Examples of synthetic polymers are PVOH, EVOH, PA (nylon-6 and nylon-6,6). Examples of biopolymers are for instance gelatin, polysaccharides such as cellulose, starch, agarose, chitosan and alginates. Examples of inorganic supports are alumina, silica, zeolites and mesoporous silica. One suitable method is the immobilization on polymeric membranes. After proper modification, polymeric membranes can become good carriers for binding urease. Modified nylon-6 membranes have been used to immobilize enzymes. Alternatively, urease can be immobilized on crosslinked poly(vinyl alcohol). The major advantage of this polymeric support is that it can be prepared any desirable polymorphic form such as film, bead, particle and powder with various porosities and surface areas.

Reference is made to following articles, which describe the immobilization of urease on nylon-6 membranes and crosslinked poly(vinyl alcohol) beads and the relative activity of the immobilized urease enzyme as a function of the pH and temperature: A. Baran Teke and 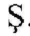 . Hamarat Baysal (2007). Immobilization of urease using glycidyl methacrylate grafted nylon-6-membranes. Process Biochemistry Volume 42, Issue 3, March 2007, Pages 439-443; S. Rejikumar and Surekha Devi (1998). Preparation and characterization of urease bound on crosslinked polyj vinyl alcohol), Journal of Molecular Catalysis B: Enzymatic 4: 61-66.

Both publications are herein included by reference.

The capsules and/or other solid forms are preferably provided with a diameter in the range of 10 microns-10 cm, preferably 1 mm-1cm, so as to handle them individually. Thereto, the capsule may furthermore contain a shell of protective materials such as gelatine, glycerol and the like. Furthermore, the capsule may be based on microencapsulation, comprising a plurality of beads with enzyme immobilized on carrier in a matrix. The matrix may be herein optimized to be slowly dissolvable, in dependence of the pH or temperature of the reaction medium, so as to obtain modified-release capsules, as known per se in the art of capsule manufacturing, particularly for pharmaceuticals. In one preferred embodiment, use is made of a capsule that does not - or at least not substantially - disintegrate. The carrier is herein preferably defined as a porous body, and the enzyme is suitably located at a surface inside said porous body.

In one suitable embodiment, the catalyst is an urease enzyme. This is suitable for the conversion of an ammonia precursor such as urea. Suitably, the urease enzyme is immobilized on a biopolymer carrier. The use of such a carrier results in improved stability. Examples of carriers are gelatine, alginates and chitosan. The use of chitosan is deemed highly suitable, since it tends to increase optimum pH of the urease to a higher pH, resulting in optimum activity in the ammonia precursor composition e.g. solution.

In the present example, use is made of a batchwise operation. The decomposition unit 2 is equipped with a heater 4 in order to thermally activate the enzyme. When the conversion has reached a predefined conversion degree, for instance when 50% or more of the ammonia precursor is converted into ammonia solution, or ideally when at least 80 % or more of the ammonia precursor is converted into aqua ammonia, the resulting effluents are then transferred to a first buffer tank 8 by the a second fluid transfer device (FTD2). The conversion may continue in this first buffer tank 8 (if necessary the effluents of buffer tank 8 will be transferred back to de decomposition unit by FTD3). The effluents are thereafter transferred from the first buffer tank 8 to a second buffer tank 9 by the FTD4, as the conversion is complete or has reached another final conversion degree. The progress of the conversion is suitably controlled by a time-control device or by a chemical sensor. A time-control device can be a clock or any timing mechanism driven by a motor, by the vehicle electronic system or by another mean known by the status of the art. A chemical sensor device can be for example a pH sensor or an ammonia sensor. Whenever necessary the effluents are sent to downstream tank by the FTD5.

In accordance with the invention, the enzyme may be transferred from a chemical conversion mode (CCM) to an enzyme protection mode (EPM) and vice versa. In the EPM, the system is configured so that there will be substantially no contact between the enzymes and the ammonia precursor. In the embodiment shown in Fig. 1, the ammonia precursor solution is pumped away, so as to transfer the enzyme from the CCM to the EPM. Whenever the chemical conversion operation is interrupted, FTD2 is activated so as to empty the decomposition unit 2 and stop the contact between the enzymes and the ammonia precursor. The enzymes are then in enzyme protection mode (EPM). The partially converted effluents are stored in the first buffer tank 8. When the conversion has to be restarted, FTD3 is activated so as to send the partially converted effluents back to the decomposition unit 2 to continue conversion and therefore switching back to the chemical conversion mode (CCM). When converted to a sufficient conversion degree, the resulting ammonia solution can be transferred to the second buffer tank 9. The solution in the second buffer tank 9 is then ready to be sent to downstream tank by the FTD5.

Optionally, thermal conditioning elements surrounding the enzymes 11 can be activated when the conversion operation is interrupted (in EPM) so as to keep the enzymes at optimal temperature and further extent enzymes useful life. This can be any heating or cooling elements known by the state-of-art; for instance, Peltier effect cells allowing cooling down, or heating up can be used. The thermal conditioning elements also contain insulating elements so as to limit the energy consumption; the thermal conditioning elements can also contain phase change materials so as to keep more easily and for longer period of time the temperature range corresponding to the optimal conservation of the protein components activity.

In an alternative embodiment, the system can be designed to contain fewer tanks, or even only one tank with subdivisions (not represented here).

**Figures 2a and 2b** show the decomposition unit 2 according to a first embodiment of the invention. The embodiment shown in Fig. 2a and 2b could be combined with the embodiment shown in Fig. 1, or be an alternative thereto. In case of being an alternative, the decomposition unit 2 shown in Fig. 2 is suitably part of a storage and conversion system further comprising a tank for the composition of a chemical compound, more particularly a composition of an ammonia precursor, and a buffer tank for the sufficiently converted composition. Furthermore, a storage unit for the catalyst composition in solid form, i.e. capsules, is suitably present.

According to the embodiment of Fig 2a and 2b, the decomposition unit 2 is equipped with a moving device 12 allowing to submerge the capsules 3 comprising the catalyst composition into the liquid composition of the chemical compound. This will transfer the catalyst composition and the system from an enzyme protection mode (EPM), shown in Fig. 2a, into a chemical conversion mode (CCM), shown in Fig. 2b. The moving device 12 is further capable of operating in the reverse direction, i.e. to transfer the catalyst composition from the CCM into the EPM. The moving device 12 is in this embodiment an actuator. Any type of actuator may be applied, such as a solenoid, a magnetic actuator, a stepper motor, hydraulic or pneumatic piston. The actuator 12 may be combined with a spring or any element acting as a spring. This has the advantage that the capsules 3 may be pulled out the liquid composition, and therewith transferred from the chemical conversion mode into enzyme protection mode, whenever a power supply is disconnected.

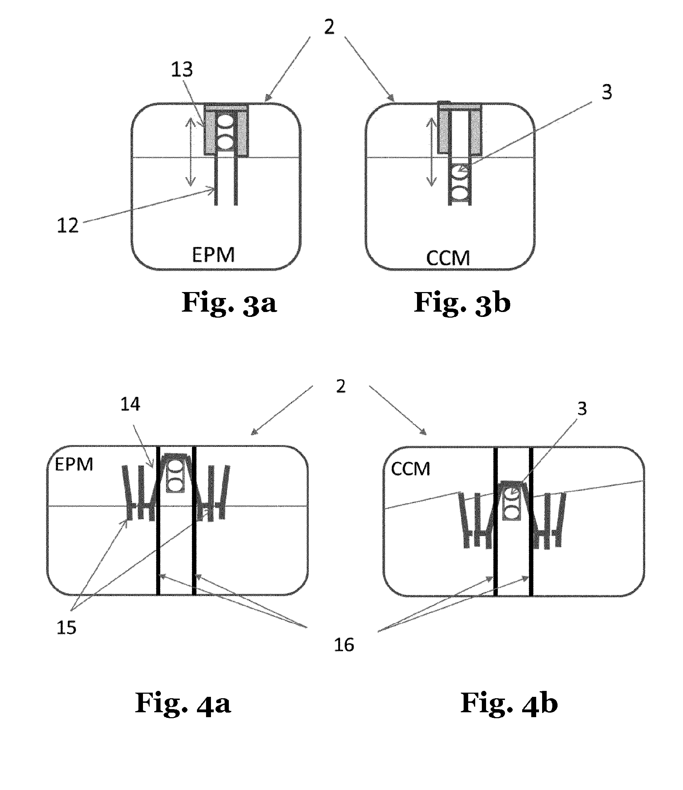

Fig. 3a and 3b show the decomposition unit 2 according to a second embodiment. Herein, the moving device 12 comprises one or more thermal conditioning elements 13. Therewith, the capsules 3 comprising the catalyst composition can be maintained within a temperature range in which the biocatalyst is conserved, i.e. is kept alive. The temperature range is suitably set so as to achieve optimum conservation.

Furthermore, the thermal conditioning elements may be under the control of a sensor and controller; for instance, the thermal conditioning elements could maintain the enzymes at their optimal operation temperature, typically around 37 °C, as long as the duration of the enzyme protection mode is shorter than a predefined limit. If however the duration of the enzyme protection mode exceeds that limit, the temperature could be reduced, so as to bring the enzymes into a sleep-mode. This sleep mode will be at a temperature in which the enzymes cannot freeze. In a further implementation hereof, the thermal conditioning elements may be controlled so as to carry out a pretreatment, wherein the capsules 3 are gradually brought to their operation temperature prior to a first use.

The thermal conditioning elements 13 are for instance embodied as heating or cooling elements known by the state-of-art; for instance, Peltier effect cells allowing cooling down, or heating up can be used. Moreover, the thermal conditioning elements may contain - alternatively or additionally - thermally insulating elements so as to limit the energy consumption; the thermal conditioning elements can also contain phase change materials so as to keep more easily and for longer period of time the temperature range corresponding to conservation of the enzymes.

In again a further embodiment, the moving device 12 may be further provided with means for providing cleaning liquid. Such cleaning liquid is for instance water. The means for provided cleaning liquid may be embodied as a jetting or spraying device. Such means are intended for operation after conversion into the enzyme protection mode, so as to remove any remaining chemical compound from the capsules. The means for the provision of cleaning liquid may alternatively be configured such that they can operate on the capsules 3 when those are in the enzyme protection mode, and more particularly brought at a location above a surface of the liquid composition of the chemical compound. The means for providing cleaning liquid could further be used, when the capsules 3 are in enzyme protection mode, so as to control the humidity of the capsules.

**Figure 4a and 4b** show the decomposition unit 2 according to a third embodiment of the invention. As in Fig 2a and 2b, Fig. 4a shows the decomposition unit 2 with the capsules 3 in enzyme protection mode and Fig. 4b shows the decomposition unit 2 with the capsules 3 in chemical conversion mode. Herein, the moving device is embodied as a floating device 14. The advantage of this floating device 14 is that it transfers from enzyme protection mode (EPM) to chemical conversion mode (CCM) automatically, i.e. without any powered means. The embodiment thereto makes use of the effect that any movement of the vehicle generates waves in the surface of the liquid composition of the compound (for instance an ammonia precursor). Due to the - sloshing- waves, liquid will be embarked onto the floating device 14. As a consequence, the floating device 14 will sink or at least be immersed into the liquid composition of the compound. Therewith, contact is established between the biological catalyst and the compound, and the biological catalyst is transferred into the chemical conversion mode (CCM), as shown in Fig. 4b.

After stopping the vehicle, the floating device 14 moves upwards again. Preferably, draining holes 15 are present that allow the evacuation of the embarked liquid. After a certain period of time (for instance 1 hour), the floating device 14 has got to the surface of the liquid composition, and the capsules 3 are brought to a position above this surface. Therewith, the enzymes have been transferred to the enzyme protection mode (EPM), as shown in Fig. 4a. The speed at which the floating device 14 arrives at the surface of the liquid, is suitably predefined. Suitably, the speed is relatively low, so as to arrange that the biochemical conversion continues for some time after stopping the vehicle. This allows for instance to have enough converted effluents at the time the vehicle is restarted.

The decomposition unit 2 of this embodiment is furthermore provided with guides 16. These guides 16 allow the sliding of the floating device 14 while keeping the device structure in constant orientation versus the tank. More particularly, a couple of guides 16 are used in between of which the capsules 3 are arranged, preferably in or on top of a holding device. The floating device may herein be provided with a bridging portion and floating elements. The bridging portion extends between the guides 16 and is in contact with the biological catalyst or preferably the holding device. The floating elements are present on opposed sides of the guides 16. Guides 16 can be of any type known in the state of the art, and can be single or multiple. Suitably, the guides 16 comprise an aperture or channel, through which said bridging portion extends, and which further limits the movement of the floating device 14. Level sensing function may be combined with or embarked into this floating device 14 or on the guides.

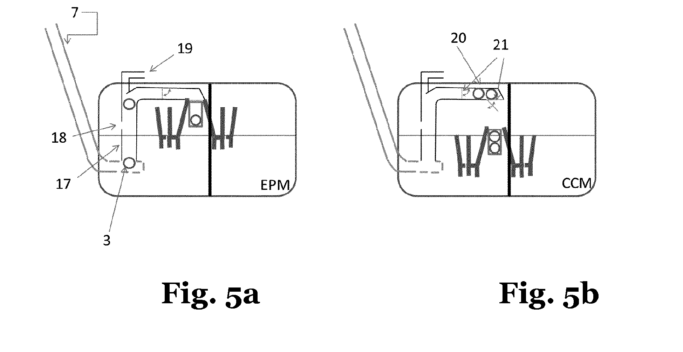

**Figure 5a and 5b** show in schematic, cross-sectional view a further embodiment of the invention. This embodiment more precisely shows a loading device for loading capsules 3. The loading device comprises a filler pipe 7, a vertical or skewed pipe 17, a degassing orifice 18 and a degassing line 19. The capsules 3 are inserted in the filler pipe 7, for instance from a storage unit or from an external source. Subsequently thereto, the liquid composition of the chemical compound, particularly an ammonia precursor, is filled into the decomposition unit 2. This suitably occurs via the same filler pipe 7. Since the density of the capsules 3 is typically lower than the density of the liquid, the capsules 3 move upwards into the vertical or skewed pipe 17 under the liquid pressure of the liquid composition of the chemical compound. After that the ammonia precursor level reaches the level of the degassing orifice 18, the vapour pressure increases inside the decomposition unit 2. Vapour will particularly collect within a vapour dome above the surface of the liquid. The background of the rising pressures is that the vapor can no longer escape through the degassing line 19, when the liquid blocks the degassing orifice 18. This blocking of the orifice 18 provokes the increase of the level of liquid in the fill pipe 7 (and so the end of the refilling operation). Additionally, the blocking provokes a pulse of pressure and liquid in the vertical pipe 17 pushing the capsules 3 into a storage chamber 20 (Fig. 4b). Devices such as flapper doors 21 can be used to control the exit of capsules 3 from the storage chamber 20, and furthermore also to control the entry of capsules into the storage chamber 20 (i.e. other flapper doors).

When fresh capsules 3 are to be added into the liquid and/or into a moving device operating therein, capsules 3 can be transferred thereto by activating a transfer means. Hereto any transfer means as known in the art may be used: release of a flapper door 21 by mechanical means, for instance release of a mechanical locker due to the contact of the empty floating device with the storage chamber, or by a controlled mechanism. Such adding of one or more capsules 3 may take place for instance right after the loading of new capsules into the storage chamber 20, or upon detection of loss of enzyme activity of the capsules 3 in use. A sensor, such as a pH sensor could be used thereto. Furthermore, a duration of the actual use could be registered. In again a further embodiment, the enzyme protection mode could be provided with test means for testing the enzyme activity.

In the embodiment shown in Fig. 5a and 5b, the capsule loading device is combined with the use of a floating device 14, as shown in Fig. 4a and 4b and as discussed hereinabove. However, the loading device may alternatively be used in combination with any actuator as shown in Fig. 2a-3b. Moreover, it is not excluded that the loading device is used so as to apply capsules 3 directly into the liquid composition.

It will be understood that thermal conditioning elements may be applied if so desired, either in or around the storage chamber 20, or to the floating device 14 or to both. Thermal conditioning elements that are able to withstand an ammonia precursor solution are for instanced wired elements, suitably with a relatively high resistance.

In an alternative embodiment, means for magnetic attraction may be present. This means is for instance a magnetic core, but could alternatively be a magnetic plate arranged adjacent to a wall of the decomposition unit (inside or outside thereof). These means may be activated when the system is ready to switch between chemical conversion mode and enzyme protection mode. The magnetic means will then attract the biological catalyst immobilized in any kind of magnetic polymer, for instance immobilized onto magnetic polyvinylalcohol microspheres, just before the system switches to the enzyme protection mode (not represented here). This switch may for instance be arranged in that the magnetic core is transferred by a moving device to outside the contact region. Alternatively, the compound may be pumped away.

## Claims

1. A system for use on board of a vehicle, comprising:
- a decomposition unit for decomposing a compound under catalysis of a biological catalyst,
- at least one transfer means for transferring one of said compound and biological catalyst towards and/or away from the other one to contact and/or separate between the compound and the biological catalyst.

2. The system as claimed in claim 1, wherein the transfer means is a moving device for moving the biological catalyst towards and away from the compound.

3. The system as claimed in claim 2, wherein the moving device is an actuator.

4. The system as claimed in claim 2, wherein the moving device is a floating device.

5. The system as claimed in claim 4, wherein the floating device is configured for being overflowed by a liquid composition of the compound when the vehicle moves, so as to bring the biological catalyst and the compound into contact.

6. The system as claimed in any of the claims 2-5, further comprising thermal conditioning means for thermal conditioning of the biological catalyst, when it is not in contact with the compound.

7. The system as claimed in claim 1, wherein the transfer means are embodied as at least one fluid transfer device for transfer of the compound towards and away from the biological catalyst, for instance a pump.

8. The system as claimed in claim 7, comprising a buffer tank into which the compound or a composition thereof can be transferred so as to get the compound away from the biological catalyst.

9. The system as claimed in any of the preceding claims 7-8, further comprising a heater for activating the biological catalyst.

10. The system as claimed in any of the preceding claims, and particularly claims 7-8, further comprising a magnetic device for attracting the biological catalyst that is immobilized on a magnetic support.

11. The system as claimed in any of the preceding claims, wherein the decomposition unit is configured for conversion of ammonia precursor into an ammonia composition.

12. A vehicle comprising the system as claimed in any of the preceding claims.

13. A method of decomposition of a compound on board of a vehicle comprising a decomposition unit provided with a first of a compound and a biological catalyst, the method comprising the steps of;
- Transferring the second of said compound and said biological catalyst to establish contact between of both, so as to decompose the compound under catalysis of the biological catalyst, and
- Transferring the second away from the first of said compound and biological catalyst, when decomposition is to be terminated or interrupted.

14. Use of biological catalyst immobilized on a carrier, particularly in the system as claimed in any of the preceding claims, for catalysis of decomposition of a compound in a decomposition unit on board of a vehicle, subsequent to transferring the biological catalyst and/or the compound for contact between the compound and the biological catalyst.

15. Use as claimed in claim 14, wherein the compound is an ammonia precursor or a hydrogen precursor.
